# EUROPEAN PATENT APPLICATION

(11) **EP 4 622 360 A1**
(43) Date of publication of application: **24.09.2025**
(21) Application number: 23899950.2
(22) Date of filing: 05.12.2023
(51) Int. Cl.: H04W 56/00, H04W 52/02

(54) **SYNCHRONIZATION METHOD AND COMMUNICATION APPARATUS**

(30) Priority: 06.12.2022 CN 202211559414
(71) Applicant: Huawei Technologies Co., Ltd., Shenzhen, Guangdong 518129 (CN)
(72) Inventor: XUE, Yifan, Shenzhen, Guangdong 518129 (CN); MADIER, Louis, Shenzhen, Guangdong 518129 (CN); LEI, Zhendong, Shenzhen, Guangdong 518129 (CN); TIE, Xiaolei, Shenzhen, Guangdong 518129 (CN)
(74) Representative: Thun, Clemens
(86) International application number: PCT/CN2023/136382
(87) International publication number: WO 2024/120374

(57) **Abstract**

This application provides a synchronization method and a communication apparatus. The method may be applied to communication systems such as NR, LTE, and V2X. The method includes: A network device sends a first signal and first information to a first module of a terminal device, where the first signal can be used to wake up a second module of the terminal device, and the first information can be used for synchronization between the network device and the second module of the terminal device; and the second module receives the first information forwarded by the first module, and performs synchronization with the network device based on the first information. In this way, this application can reduce time overheads and power consumption overheads needed for synchronization when the second module switches from a sleep state to an awake state.

## Description

This application claims priority to Chinese Patent Application No. 202211559414.9, filed with the China National Intellectual Property Administration on December 6, 2022 and entitled "SYNCHRONIZATION METHOD AND COMMUNICATION APPARATUS", which is incorporated herein by reference in its entirety.

### TECHNICAL FIELD

This application relates to the field of communication technologies, and more specifically, to a synchronization method and a communication apparatus.

### BACKGROUND

A terminal device may include at least two modules with different power consumption, and the at least two modules with different power consumption work together to implement low power consumption. For example, a wake-up signal is received through a separate low-power small circuit, for example, a wake-up receiver (wake-up receiver, WUR), and a main receiver may be in a deep sleep state. After the terminal device detects the wake-up signal through the WUR, the terminal device triggers wake-up of the main receiver. After the main receiver wakes up, the terminal device may perform a paging (paging) receiving procedure through the main receiver, for example, receive a paging message.

However, after the main receiver switches from being in a sleep state for a long time to an awake state, the main receiver needs to spend a long time and high power consumption for synchronization with a network device.

### SUMMARY

This application provides a synchronization method and a communication apparatus, to reduce time overheads and power consumption overheads needed for synchronization when a second module switches from a sleep state to an awake state.

According to a first aspect, a synchronization method is provided. The method is performed by a terminal device, the terminal device includes a first module and a second module, and the method includes: The first module receives a first signal and first information from a network device, where the first signal can be used to wake up the second module, and the first information can be used for synchronization between the second module and the network device; and the second module performs synchronization with the network device based on the first information.

It may be understood that internal signaling interaction exists between the first module and the second module. The first module may forward the received first information to the second module.

Specifically, after detecting the first signal used to wake up the second module, the first module triggers wake-up of the second module; and after being woken up, the second module performs synchronization with the network device based on the first information used for synchronization between the second module and the network device. In this way, time overheads and power consumption overheads needed for synchronization when the second module switches from a sleep state to an awake state can be reduced.

In conclusion, according to a solution in which the network device sends the first information used for synchronization to the first module of the terminal device and the first module forwards the first information to the second module, this application can reduce the time overheads and the power consumption overheads needed for the synchronization when the second module switches from the sleep state to the awake state.

In a possible implementation, the first information includes at least one of the following: an index of a time unit on a first frequency resource, an index of a time unit on a second frequency resource, or frequency information, where the first frequency resource is a frequency resource (or a physical resource) used by the first module to receive the first signal, the second frequency resource is a frequency resource (or a physical resource) used by the second module to receive a second signal from the network device, the second signal includes at least one of a first synchronization signal block, a physical downlink control channel, a physical downlink shared channel, and a channel state information-reference signal, and the frequency information indicates a frequency position of a second synchronization signal block, where the second synchronization signal block is sent by the network device to the second module.

In this way, the second module may quickly complete time and/or frequency synchronization based on one or more of the index of the time unit on the first frequency resource, the index of the time unit on the second frequency resource, the frequency information, or the like in the first information, to reduce the time overheads and the power consumption overheads needed for the synchronization when the second module switches from the sleep state to the awake state.

In a possible implementation, there is an association relationship between the time unit on the first frequency resource and the time unit on the second frequency resource.

In this way, the first module may send only the index of the time unit on the first frequency resource to the second module, and the second module may determine the index of the corresponding time unit on the second frequency resource based on the index of the time unit on the first frequency resource and the association relationship between the time unit on the first frequency resource and the time unit on the second frequency resource.

In a possible implementation, the association relationship includes at least one of the following: a length of one time unit on the second frequency resource corresponds to a length of at least one time unit on the first frequency resource, or a boundary of any time unit on the second frequency resource is aligned with or overlaps a boundary of a time unit on the first frequency resource.

In a possible implementation, the time unit on the first frequency resource includes at least one of the following: a symbol, a slot, a subframe, or a frame; and the time unit on the second frequency resource includes at least one of the following: a symbol, a slot, a subframe, or a frame.

In this way, the second module may quickly complete time synchronization based on at least one of the foregoing information, to reduce the time overheads and the power consumption overheads needed for the synchronization when the second module switches from the sleep state to the awake state.

In a possible implementation, the frequency information includes at least one of the following: an index of a synchronization raster of the second synchronization signal block, or a frequency offset between the frequency position of the second synchronization signal block and a frequency position of the first signal.

In this way, the second module may quickly complete frequency synchronization based on at least one of the foregoing information, to reduce the time overheads and the power consumption overheads needed for the synchronization when the second module switches from the sleep state to the awake state.

According to a second aspect, a synchronization method is provided. The method is performed by a network device, and the method includes: The network device sends a first signal to a first module of a terminal device, where the first signal can be used to wake up a second module of the terminal device; and the network device sends first information to the first module, where the first information can be used for synchronization between the second module and the network device.

In a possible implementation, the first information includes at least one of the following: an index of a time unit on a first frequency resource, an index of a time unit on a second frequency resource, or frequency information, where the first frequency resource is a frequency resource used by the network device to send the first signal to the first module, the second frequency resource is a frequency resource used by the network device to send a second signal to the second module, the second signal includes at least one of a first synchronization signal block, a physical downlink control channel, a physical downlink shared channel, and a channel state information-reference signal, and the frequency information indicates a frequency position of a second synchronization signal block, where the second synchronization signal block is sent by the network device to the second module.

In a possible implementation, there is an association relationship between the time unit on the first frequency resource and the time unit on the second frequency resource.

In a possible implementation, the association relationship includes at least one of the following: a length of one time unit on the second frequency resource corresponds to a length of at least one time unit on the first frequency resource; or a boundary of any time unit on the second frequency resource is aligned with or overlaps a boundary of a time unit on the first frequency resource.

In a possible implementation, the time unit on the first frequency resource includes at least one of the following: a symbol, a slot, a subframe, or a frame; and the time unit on the second frequency resource includes at least one of the following: a symbol, a slot, a subframe, or a frame.

In a possible implementation, the frequency information includes at least one of the following: an index of a synchronization raster of the second synchronization signal block, or a frequency offset between the frequency position of the second synchronization signal block and a frequency position of the first signal.

According to a third aspect, a synchronization method is provided. The method is performed by a terminal device, the terminal device includes a first module and a second module, and the method includes: The first module receives a first signal from a network device, where the first signal can be used to wake up the second module; the first module triggers wake-up of the second module based on the first signal; the first module sends second information to the second module, where the second information is used for synchronization between the second module and the network device; and the second module performs synchronization with the network device based on the second information.

Specifically, after detecting the first signal used to wake up the second module, the first module triggers the wake-up of the second module; and after being woken up, the second module performs synchronization with the network device based on the second information used for synchronization between the second module of the terminal device and the network device. In this way, time overheads and power consumption overheads needed for synchronization when the second module switches from a sleep state to an awake state can be reduced.

In conclusion, the first module of the terminal device sends, to the second module, the second information used for synchronization between the second module and the network device, so that this application can reduce the time overheads and the power consumption overheads needed for the synchronization when the second module switches from the sleep state to the awake state.

In a possible implementation, the method further includes: The first module receives first information from the network device, where the first information is used for synchronization between the second module and the network device, and the second information includes the first information.

Specifically, the first module may trigger the wake-up of the second module and the first module may send the second information to the second module simultaneously or staggeredly. This is not limited in this application.

It may be understood that, that the second information includes the first information may include: The second information is the first information; or the second information includes third information and the second information. The third information is generated by the first module, and may also be used for synchronization between the second module and the network device. In addition, generation of the third information may be completed after receiving of the first information, or may be completed before receiving of the first information. This is not limited in this application.

Specifically, the network device sends, to the first module, the first information used for synchronization between the second module and the network device, the first module forwards the second information including the first information to the second module, and the second module performs synchronization with the network device based on the second information. In this way, the time overheads and the power consumption overheads needed for the synchronization when the second module switches from the sleep state to the awake state can be reduced.

In a possible implementation, the first information includes at least one of the following: an index of a time unit on a first frequency resource, an index of a time unit on a second frequency resource, or frequency information, where the first frequency resource is a frequency resource used by the first module to receive the first signal, the second frequency resource is a frequency resource used by the second module to receive a second signal from the network device, the second signal includes at least one of a first synchronization signal block, a physical downlink control channel, a physical downlink shared channel, and a channel state information-reference signal, and the frequency information indicates a frequency position of a second synchronization signal block, where the second synchronization signal block is sent by the network device to the second module.

In a possible implementation, the second information further includes at least one of the following: boundary information of a symbol on the first frequency resource, boundary information of a symbol on the second frequency resource, or a frequency offset between a frequency generated by the first module based on a reference clock and a frequency of a third signal sent by the network device, where the third signal is used for frequency synchronization between the first module and the network device.

In a possible implementation, the boundary information of the symbol on the first frequency resource is determined by the first module based on a fourth signal, and the fourth signal is used for time synchronization between the first module and the network device.

In a possible implementation, there is an association relationship between the time unit on the first frequency resource and the time unit on the second frequency resource.

In a possible implementation, the association relationship between the time unit on the first frequency resource and the time unit on the second frequency resource includes at least one of the following: a length of one time unit on the second frequency resource corresponds to a length of at least one time unit on the first frequency resource; or a boundary of any time unit on the second frequency resource is aligned with or overlaps a boundary of a time unit on the first frequency resource.

In a possible implementation, the time unit on the first frequency resource includes at least one of the following: a symbol, a slot, a subframe, or a frame; and the time unit on the second frequency resource includes at least one of the following: a symbol, a slot, a subframe, or a frame.

In a possible implementation, the frequency information includes at least one of the following: an index of a synchronization raster of the second synchronization signal block, or a frequency offset between the frequency position of the second synchronization signal block and a frequency position of the first signal.

According to a fourth aspect, a communication apparatus is provided. The communication apparatus may be used in the terminal device in the first aspect. The communication apparatus may be the terminal device, an apparatus (for example, a chip, a chip system, or a circuit) in the terminal device, or an apparatus that can be used in cooperation with the terminal device.

In a possible implementation, the communication apparatus may include modules or units that are in one-to-one correspondence with the methods/operations/steps/actions described in the first aspect. The modules or units may be implemented by a hardware circuit, software, or a combination of a hardware circuit and software.

In a possible implementation, the communication apparatus includes: a first module, configured to receive a first signal from a network device, where the first signal can be used to wake up a second module of the communication apparatus; the first module is further configured to receive first information from the network device, where the first information can be used for synchronization between the second module and the network device; and the second module is configured to perform synchronization with the network device based on the first information.

In a possible implementation, the first information includes at least one of the following: an index of a time unit on a first frequency resource, an index of a time unit on a second frequency resource, or frequency information, where the first frequency resource is a frequency resource used by the first module to receive the first signal, the second frequency resource is a frequency resource used by the second module to receive a second signal from the network device, the second signal includes at least one of a first synchronization signal block, a physical downlink control channel, a physical downlink shared channel, and a channel state information-reference signal, and the frequency information indicates a frequency position of a second synchronization signal block, where the second synchronization signal block is sent by the network device to the second module.

In a possible implementation, there is an association relationship between the time unit on the first frequency resource and the time unit on the second frequency resource.

In a possible implementation, the association relationship includes at least one of the following: a length of one time unit on the second frequency resource corresponds to a length of at least one time unit on the first frequency resource; or a boundary of any time unit on the second frequency resource is aligned with or overlaps a boundary of a time unit on the first frequency resource.

In a possible implementation, the time unit on the first frequency resource includes at least one of the following: a symbol, a slot, a subframe, or a frame; and the time unit on the second frequency resource includes at least one of the following: a symbol, a slot, a subframe, or a frame.

In a possible implementation, the frequency information includes at least one of the following: an index of a synchronization raster of the second synchronization signal block, or a frequency offset between the frequency position of the second synchronization signal block and a frequency position of the first signal.

According to a fifth aspect, a communication apparatus is provided. The communication apparatus may be used in the network device in the second aspect. The communication apparatus may be the network device, an apparatus (for example, a chip, a chip system, or a circuit) in the network device, or an apparatus that can be used in cooperation with the network device.

In a possible implementation, the communication apparatus may include modules or units that are in one-to-one correspondence with the methods/operations/steps/actions described in the second aspect. The modules or units may be implemented by a hardware circuit, software, or a combination of a hardware circuit and software.

In a possible implementation, the communication apparatus includes: a transceiver unit, configured to send a first signal to a first module of a terminal device, where the first signal can be used to wake up a second module of the terminal device; and the transceiver unit is further configured to send first information to the first module, where the first information can be used for synchronization between the second module and the network device.

In a possible implementation, the first information includes at least one of the following: an index of a time unit on a first frequency resource, an index of a time unit on a second frequency resource, or frequency information, where the first frequency resource is a frequency resource used by the communication apparatus to send the first signal, the second frequency resource is a frequency resource used by the communication apparatus to send a second signal to the second module, the second signal includes at least one of a first synchronization signal block, a physical downlink control channel, a physical downlink shared channel, and a channel state information-reference signal, and the frequency information indicates a frequency position of a second synchronization signal block, where the second synchronization signal block is sent by the communication apparatus to the second module.

In a possible implementation, there is an association relationship between the time unit on the first frequency resource and the time unit on the second frequency resource.

In a possible implementation, the association relationship includes at least one of the following: a length of one time unit on the second frequency resource corresponds to a length of at least one time unit on the first frequency resource, or a boundary of any time unit on the second frequency resource is aligned with or overlaps a boundary of a time unit on the first frequency resource.

In a possible implementation, the time unit on the first frequency resource includes at least one of the following: a symbol, a slot, a subframe, or a frame; and the time unit on the second frequency resource includes at least one of the following: a symbol, a slot, a subframe, or a frame.

In a possible implementation, the frequency information includes at least one of the following: an index of a synchronization raster of the second synchronization signal block, or a frequency offset between the frequency position of the second synchronization signal block and a frequency position of the first signal.

According to a sixth aspect, a communication apparatus is provided. The communication apparatus may be used in the terminal device in the third aspect. The communication apparatus may be the terminal device, an apparatus (for example, a chip, a chip system, or a circuit) in the terminal device, or an apparatus that can be used in cooperation with the terminal device.

In a possible implementation, the communication apparatus may include modules or units that are in one-to-one correspondence with the methods/operations/steps/actions described in the third aspect. The modules or units may be implemented by a hardware circuit, software, or a combination of a hardware circuit and software.

In a possible implementation, the communication apparatus includes a first module and a second module. The first module is configured to receive a first signal from a network device, where the first signal can be used to wake up the second module; the first module is configured to trigger wake-up of the second module based on the first signal; the first module is configured to send second information to the second module, where the second information can be used for synchronization between the second module and the network device; and the second module is configured to perform synchronization with the network device based on the second information.

In a possible implementation, the first module is further configured to receive first information from the network device, where the first information is used for synchronization between the network device and the second module, and the second information includes the first information.

In a possible implementation, the first information includes at least one of the following: an index of a time unit on a first frequency resource, an index of a time unit on a second frequency resource, or frequency information, where the first frequency resource is a frequency resource used by the first module to receive the first signal, the second frequency resource is a frequency resource used by the second module to receive a second signal from the network device, the second signal includes at least one of a first synchronization signal block, a physical downlink control channel, a physical downlink shared channel, and a channel state information-reference signal, and the frequency information indicates a frequency position of a second synchronization signal block, where the second synchronization signal block is sent by the network device to the second module.

In a possible implementation, the second information further includes at least one of the following: boundary information of a symbol on the first frequency resource, boundary information of a symbol on the second frequency resource, or a frequency offset between a frequency generated by the first module based on a reference clock and a frequency of a third signal sent by the network device, where the third signal is used for frequency synchronization between the first module and the network device.

In a possible implementation, the boundary information of the symbol on the first frequency resource is determined by the first module based on a fourth signal, and the fourth signal is used for time synchronization between the first module and the network device.

In a possible implementation, there is an association relationship between the time unit on the first frequency resource and the time unit on the second frequency resource.

In a possible implementation, the association relationship between the time unit on the first frequency resource and the time unit on the second frequency resource includes at least one of the following: a length of one time unit on the second frequency resource corresponds to a length of at least one time unit on the first frequency resource; or a boundary of any time unit on the second frequency resource is aligned with or overlaps a boundary of a time unit on the first frequency resource.

In a possible implementation, the time unit on the first frequency resource includes at least one of the following: a symbol, a slot, a subframe, or a frame; and the time unit on the second frequency resource includes at least one of the following: a symbol, a slot, a subframe, or a frame.

In a possible implementation, the frequency information includes at least one of the following: an index of a synchronization raster of the second synchronization signal block, or a frequency offset between the frequency position of the second synchronization signal block and a frequency position of the first signal.

According to a seventh aspect, a communication apparatus is provided, and includes a processor. The processor is configured to: execute a computer program or instructions, or use a logic circuit, to enable the communication apparatus to perform the method according to any one of the first aspect and the possible implementations of the first aspect, or enable the communication apparatus to perform the method according to any one of the second aspect and the possible implementations of the second aspect, or enable the communication apparatus to perform the method according to any one of the third aspect and the possible implementations of the third aspect.

In a possible implementation, the communication apparatus further includes a memory, and the memory is configured to store the computer program or the instructions.

In a possible implementation, the communication apparatus further includes a communication interface, and the communication interface is configured to input and/or output a signal.

According to an eighth aspect, a communication apparatus is provided, and includes a logic circuit and an input/output interface. The input/output interface is configured to input and/or output a signal. The logic circuit is configured to perform the method according to any one of the first aspect and the possible implementations of the first aspect, or the logic circuit is configured to perform the method according to any one of the second aspect and the possible implementations of the second aspect, or the logic circuit is configured to perform the method according to any one of the third aspect and the possible implementations of the third aspect.

According to a ninth aspect, a computer-readable storage medium is provided. The computer-readable storage medium stores a computer program or instructions. When the computer program or the instructions are run on a computer, the method according to any one of the first aspect and the possible implementations of the first aspect is performed, or the method according to any one of the second aspect and the possible implementations of the second aspect is performed, or the method according to any one of the third aspect and the possible implementations of the third aspect is performed.

According to a tenth aspect, a computer program product is provided, and includes instructions. When the instructions are run on a computer, the method according to any one of the first aspect and the possible implementations of the first aspect is performed, or the method according to any one of the second aspect and the possible implementations of the second aspect is performed, or the method according to any one of the third aspect and the possible implementations of the third aspect is performed.

For descriptions of beneficial effects of the second aspect to the tenth aspect, refer to descriptions of beneficial effects of the first aspect. Details are not described herein again.

### BRIEF DESCRIPTION OF DRAWINGS

FIG. 1 is a diagram of a structure of a communication system 100 to which an embodiment of this application is applicable;
FIG. 2 is a diagram in which a terminal device receives a wake-up signal through a first module;
FIG. 3 is a diagram of a waveform of a wake-up signal during OOK modulation;
FIG. 4 is a diagram of a waveform of a wake-up signal during FSK modulation;
FIG. 5 is a schematic interaction flowchart of a synchronization method 500;
FIG. 6 is a diagram of an association relationship #1 between a time unit on a first frequency resource and a time unit on a second frequency resource;
FIG. 7 is a diagram in which a first module sends information 1 to a second module;
FIG. 8 is a schematic interaction flowchart of a synchronization method 800;
FIG. 9 is a diagram of an association relationship #2 between a symbol on a first frequency resource and a symbol on a second frequency resource;
FIG. 10 is a diagram of performing coarse time synchronization by a second module;
FIG. 11 is a schematic interaction flowchart of a synchronization method 1100;
FIG. 12 is a diagram of movement of a terminal device between cells;
FIG. 13 is a block diagram of a communication apparatus 1300 according to an embodiment of this application;
FIG. 14 is a block diagram of a communication apparatus 1400 according to an embodiment of this application;
FIG. 15 is a block diagram of a communication apparatus 1500 according to an embodiment of this application;
FIG. 16 is a block diagram of a communication apparatus 1600 according to an embodiment of this application; and
FIG. 17 is a block diagram of a communication apparatus 1700 according to an embodiment of this application.

### DESCRIPTION OF EMBODIMENTS

The following describes technical solutions of this application with reference to the accompanying drawings.

The technical solutions in this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) system or a new radio (new radio, NR) system, an evolved system after 5G like a 6th generation (6th generation, 6G) system, or a non-terrestrial network (non-terrestrial network, NTN) system like an inter-satellite communication system and a satellite communication system. The satellite communication system includes a satellite base station and a terminal device. The satellite base station provides a communication service for the terminal device. The satellite base station may also communicate with a terrestrial base station. A satellite may be used as a base station, or may be used as a terminal device. The satellite may be a non-terrestrial base station, a non-terrestrial device, or the like, for example, an uncrewed aerial vehicle, a hot air balloon, a low earth orbit satellite, a medium earth orbit satellite, or a high earth orbit satellite.

The technical solutions in this application are applicable to both a homogeneous network scenario and a heterogeneous network scenario. In addition, a transmission point is not limited. Coordinated multipoint transmission may be performed between macro base stations, between micro base stations, and between a macro base station and a micro base station. The technical solutions in this application are applicable to an FDD system/a TDD system. The technical solutions in this application are applicable to not only a low-frequency scenario (sub-6G), but also a highfrequency scenario (above 6 GHz), terahertz, optical communication, and the like. The technical solutions in this application are applicable to not only communication between a network device and a terminal, but also communication between network devices, communication between terminals, communication in the internet of vehicles, communication in the internet of things, communication in the industrial internet, and the like.

The technical solutions in this application may also be applied to a scenario in which the terminal is connected to a single base station. A base station connected to the terminal and a core network (core network, CN) connected to the base station are in a same standard. For example, if the CN is a 5G core, the base station is correspondingly a 5G base station, and the 5G base station is directly connected to the 5G core. Alternatively, if the CN is a 6G core, the base station is a 6G base station, and the 6G base station is directly connected to the 6G core. The technical solutions in this application are also applicable to a dual connectivity (dual connectivity, DC) scenario in which the terminal is connected to at least two base stations.

The technical solutions in this application are also applicable to a macro-micro scenario including different forms of base stations in a communication network. For example, the base station may be a satellite, an air balloon station, or an uncrewed aerial vehicle station. The technical solutions in this application are also applicable to a scenario in which both a wide-coverage base station and a small-coverage base station exist.

The technical solutions in this application may be applied to a scenario in which there is a high-reliability service requirement, for example, a port scenario, an industrial manufacturing scenario, a transportation scenario, or a coal mine scenario.

The technical solutions in this application may be further applied to 5.5G, 6G, and later wireless communication systems. Application scenarios include but are not limited to scenarios such as terrestrial cellular communication, an NTN, satellite communication, high altitude platform station (high altitude platform station, HAPS) communication, vehicle-to-everything (vehicle-to-everything, V2X), integrated access and backhaul (integrated access and backhaul, IAB), and reconfigurable intelligent surface (reconfigurable intelligent surface, RIS) communication.

The terminal in this application may be a device having wireless sending and receiving functions, and may be user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), customer-premises equipment (customer-premises equipment, CPE), a smart point of sale (point of sale, POS) machine, a handheld device having a wireless communication function, a computing device or another processing device connected to a wireless modem, a vehicle-mounted device, a communication device carried on a high-altitude aircraft, a wearable device, an uncrewed aerial vehicle, a robot, a terminal in device-to-device (device-to-device, D2D) communication, a terminal in V2X, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in an evolved communication network after 5G, or the like. This is not limited in this application.

In this application, a communication apparatus configured to implement a function of the terminal device may be the terminal device, or may be an apparatus that can support the terminal device in implementing the function, for example, a chip system. The apparatus may be installed in the terminal device or used in cooperation with the terminal device. In this application, the chip system may include a chip, or may include a chip and another discrete component.

The network device in this application is a device having wireless sending and receiving functions, and is configured to communicate with the terminal device. The access network device may be a node in a radio access network (radio access network, RAN), and may be referred to as a base station, or may be referred to as a RAN node. The access network device may be an evolved NodeB (evolved NodeB, eNB or eNodeB) in LTE, a base station in a 5G network like a gNodeB (gNB), a base station in an evolved public land mobile network (public land mobile network, PLMN) after 5G, a broadband network gateway (broadband network gateway, BNG), an aggregation switch, a 3rd generation partnership project (3rd generation partnership project, 3GPP) access device, or the like. For example, the RAN may be configured as a RAN, an open radio access network (open radio access network, O-RAN), or a cloud access network (cloud radio access network, C-RAN) defined in the 3GPP protocol.

The network device in this application may further include base stations in various forms, for example, a macro base station, a micro base station (also referred to as a small cell), a relay station, a transmission point (transmitting and receiving point, TRP), a transmitting point (transmitting point, TP), a mobile switching center, and a device that functions as a base station in device-to-device (device-to-device, D2D), vehicle-to-everything (vehicle-to-everything, V2X), and machine-to-machine (machine, M2M) communication, and a network device in the NTN communication system. This is not specifically limited in this application.

The network device in this application may further include a network element or a module that implements some functions of the base station, for example, include one or more of the following: a central unit (central unit, CU), a distributed unit (distributed unit, DU), or a radio unit (radio unit, RU). Optionally, the CU may be further divided into a CU-control plane (control plane, CP) and a CU-user plane (user plane, UP). Functions of the CU and the DU may be implemented by different network elements, or may be implemented by a baseband unit (baseband unit, BBU) of the base station. A function of the RU may be implemented by a radio frequency device of the base station. For example, the radio frequency device of the base station may be a remote radio unit (remote radio unit, RRU), a pico remote radio unit (pico remote radio unit, pRRU), an active antenna unit (active antenna unit, AAU), or another unit, module, or device having a radio frequency processing function. A communication interface protocol between the BBU and the radio frequency device may be a common public radio interface (common public radio interface, CPRI) interface protocol, an enhanced common public radio interface (enhanced common public radio interface, eCPRI) interface protocol, a fronthaul interface protocol between a DU and an RU in an O-RAN system, or the like. This is not limited.

In this application, an apparatus configured to implement a function of the network device may be the network device, or may be an apparatus that can support the network device in implementing the function, for example, a chip system. The apparatus may be installed in the network device or used in cooperation with the network device. In embodiments of this application, the chip system may include a chip, or may include a chip and another discrete component.

The following first describes an example of a communication system to which an embodiment of this application is applicable.

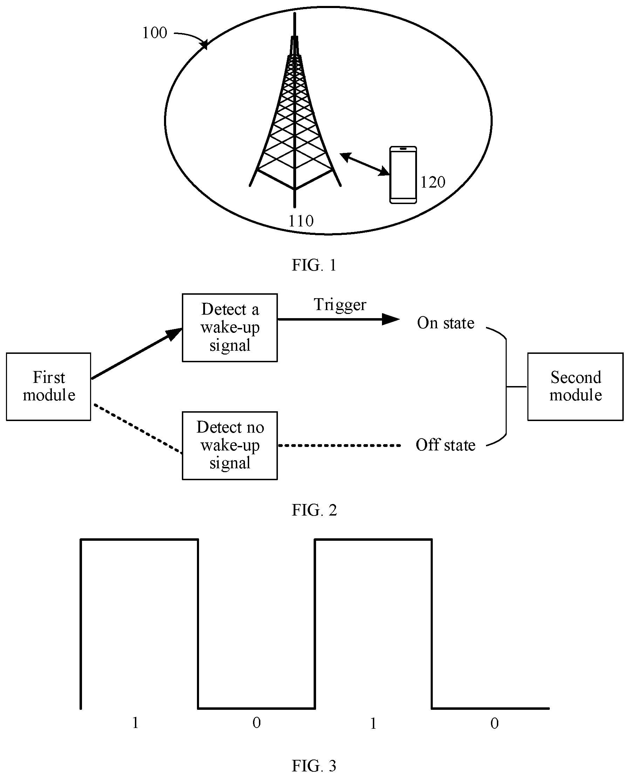

FIG. 1 is a diagram of a communication system 100 to which an embodiment of this application is applicable. As shown in FIG. 1, the communication system 100 includes a network device 110 and a terminal device 120. A quantity of terminal devices and a quantity of network devices included in the communication system 100 are not limited in this application. The terminal device 120 may be any terminal device listed above, and the network device 110 may be any network device listed above. As shown in FIG. 1, when the network device 110 communicates with the terminal device 120, the network device 110 manages one or more cells, and each cell may include one or more terminal devices.

In a possible implementation, the network device 110 and the terminal device 120 form a single-cell communication system. Without loss of generality, a cell may be denoted as a cell #1. The network device 110 may be a network device in the cell #1, or the network device 110 may serve a terminal device (for example, the terminal device 120) in the cell #1.

Optionally, the cell may be further understood as an area within coverage of a wireless signal of the network device 110.

The following briefly describes technical content related to the technical solutions of this application.

When the terminal device 120 is in an idle (idle) state/inactive (inactive) state, the terminal device 120 may periodically receive paging (paging). In an example, a procedure in which the terminal device 120 receives paging includes: When the terminal device 120 is in an idle state/inactive state, the terminal device 120 obtains, through calculation based on an identifier (identifier, ID) (UE ID) of the terminal device 120, a paging frame (paging frame, PF) and a position of a paging occasion (paging occasion, PO) in the PF, and receives the paging (paging) in the PO. The procedure of receiving paging is merely an example for description. For example, reference may be made to a related standard. This is not limited in this application.

Generally, regardless of whether the terminal device 120 performs the paging receiving procedure when the terminal device 120 is in the idle state/inactive state, or receives data when the terminal device 120 is in a connected state, the terminal device 120 uses a same receiving module (or receiver, or receiver circuit). In this application, a module that completes these functions (or performs related steps) may be referred to as a second module. It may be understood that the second module is merely named for differentiation, and a specific name of the second module does not limit the protection scope of this application. For example, the second module may alternatively be a second circuit or a main circuit. For ease of description, the second module is uniformly used for description below.

A process in which the terminal device 120 receives a signal through the second module may be referred to as a process in which the signal is transmitted on a link (which may be denoted as a second link for differentiation). The second link represents a connection relationship between the terminal device 120 and the network device 110, and is a logical concept rather than a physical entity. The second link may also be referred to as a main link, and is uniformly described as a second link below for ease of description.

It may be understood that, power consumption of performing, by the terminal device 120, the paging receiving procedure through the second module is high. For example, the terminal device 120 first uses a receiving module of the second module to receive a downlink signal, then performs blind detection on a physical downlink control channel (physical downlink control channel, PDCCH), and finally performs decoding on a received physical downlink shared channel (physical downlink shared channel, PDSCH). All these cause high power consumption. In addition, because a circuit structure of the second module is complex, reference power consumption of the second module during operation is also high.

To reduce high power consumption caused when the terminal device 120 performs the paging receiving procedure through the second module, the terminal device 120 may use a separate low-power small circuit to receive a wake-up signal (wake-up signal/radio, WUS/WUR). The wake-up signal indicates paging-related information, and the paging-related information may include a paged terminal device or a paged terminal device group. The low-power small circuit may be implemented by using a separate small circuit or chip with a simple structure, so that power consumption of the low-power small circuit is low.

In a possible implementation, the low-power small circuit may alternatively be a wake-up receiver (wake-up receiver, WUR), a wake-up circuit, a low-power circuit, or the like. A specific name of the low-power small circuit is not limited in this application. In this application, the low-power small circuit may be referred to as a first module. It may be understood that the first module is merely named for differentiation, and a specific name of the first module does not limit the protection scope of this application. For example, the first module may alternatively be a first circuit or a wake-up circuit. For ease of description, the low-power small circuit is uniformly described as the first module below.

Similarly, a process in which the terminal device 120 receives a signal through the first module may be referred to as a process in which the signal is transmitted on a link (denoted as a first link for differentiation). The first link represents a connection relationship between the terminal device 120 and the network device 110, and is a logical concept rather than a physical entity. It should be understood that the wake-up signal is merely an example name, and a name thereof is not limited in this application. In addition, for descriptions of receiving the wake-up signal by the terminal device 120 through the first module, refer to FIG. 2.

FIG. 2 is a diagram in which the terminal device receives the wake-up signal through the first module. As shown in FIG. 2, when the terminal device detects the wake-up signal through the first module, the wake-up signal may include paging-related indication information. Specifically, the terminal device 120 receives a signal through the first module. If the terminal device 120 detects no wake-up signal associated with the terminal device 120, the terminal device 120 continues receiving a signal through the first module, and the second module may be in an off state (or a sleep state); or if the terminal device 120 detects a wake-up signal associated with the terminal device 120, the terminal device 120 triggers wake-up of the second module, that is, causes the second module to be in/to switch to an on state (or referred to as a working state, or referred to as an active state). After the second module is turned on, the terminal device 120 performs a paging receiving procedure, for example, receives a paging PDCCH, and receives a paging PDSCH after detecting the paging PDCCH on a corresponding PO.

It should be understood that FIG. 2 is described by using an example in which the wake-up signal includes some paging-related information (for example, a part of a UE ID of a paged terminal device, or an ID of a paged terminal device group). This is not limited. For example, the wake-up signal may alternatively include all paging-related information (for example, a complete UE ID of a paged terminal device). In this case, after the second module is turned on, the terminal device 120 initiates random access or the like. If the wake-up signal includes all paging-related information, after the second module is turned on, the terminal device 120 receives the paging-related information.

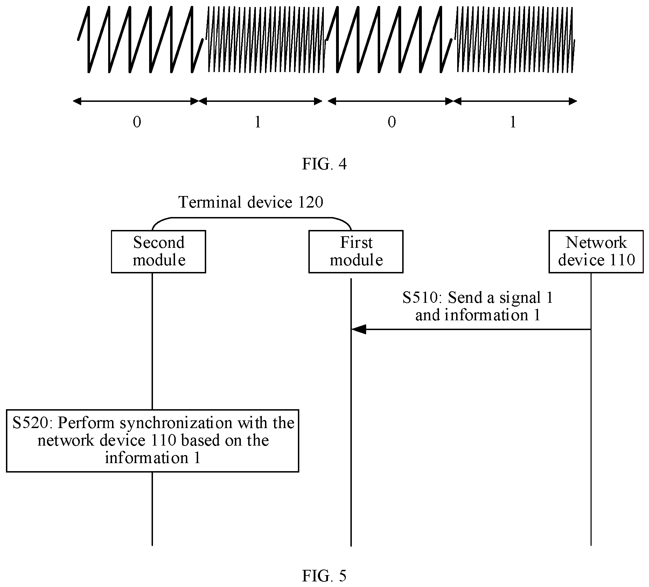

In an example, to ensure a power consumption gain, the wake-up signal may be modulated through on-off keying (on-off keying, OOK) or frequency-shift keying (frequency-shift keying, FSK), and a corresponding wake-up circuit may receive a wake-up signal by using an envelope detection method. For details, refer to FIG. 3 and FIG. 4.

FIG. 3 is a diagram of a waveform of a wake-up signal during OOK modulation. As shown in FIG. 3, when OOK modulation is used for a wake-up signal, each bit (namely, an encoded bit) corresponds to one symbol (symbol). Similarly, a symbol may also be referred to as a chip (chip), or may be referred to as another name. This is not limited herein. When the bit is 1, a signal is sent in a length of the symbol (that is, a signal transmit power is not 0 in the length of the symbol). When the bit is 0, no signal is sent in a length of the symbol (that is, a signal transmit power is 0 in the length of the symbol). As shown in FIG. 3, the waveform shown in FIG. 3 may represent four bits 1010.

FIG. 4 is a diagram of a waveform of a wake-up signal during FSK modulation. As shown in FIG. 4, when FSK modulation is used for a wake-up signal, different frequency resources are used for different information. For example, 2FSK carries 1-bit information. When an information bit is 0, information is sent on a frequency resource f0, and no information is sent on a frequency resource f1; or when an information bit is 1, information is sent on a frequency resource fl, and no information is sent on a frequency resource f0. It is assumed that f0<f1, and a waveform of an FSK signal whose information is 0101 is shown in FIG. 4. In a 1^{st} symbol and a 3^{rd} symbol, a frequency of the signal is relatively low, and in a 2^{nd} symbol and a 4^{th} symbol, a frequency of the signal is relatively high. When demodulating the signal, a receive end may compare power of f0 and f1 to determine whether sent information is 0 or 1.

In conclusion, when detecting the wake-up signal associated with the terminal device 120, the first module triggers wake-up of the second module, that is, causes the second module to be in/to switch to the on state. After being woken up, the second module performs synchronization with the network device 110. After being woken up, the second module performs detection on a synchronization signal block (synchronization signal and physical broadcast channel block, SSB) periodically sent by the network device 120, and performs time/frequency synchronization based on the SSB. Because the second module is in a sleep state for a long time, the woken-up second module needs to spend a long time to obtain information used for synchronization between the terminal device 120 and the network device 110. Consequently, both time overheads and power consumption overheads needed by the woken-up second module for synchronization are high.

Specifically, when the first module works, if no wake-up signal is detected, the second module is in an off state (which may be understood as a sleep state, or may be understood as being in a sleep state for a long time). The "off state" mentioned herein may also be referred to as an "extremely deep sleep state (which may be understood as being in a sleep state for a long time)". In this state, most modules of the second module may be turned off. For example, a radio frequency front end, a clock crystal oscillator, a controller, and baseband processing are in a disabled state, and a DDR memory may be disabled or in a low power consumption running state.

In this case, because there is a specific error between clock crystal oscillators of the terminal device 120 and the network device 110, with accumulation for a long time, an offset between the clock crystal oscillators of the terminal device 120 and the network device 110 becomes larger. After receiving the wake-up signal, the first module triggers wake-up of the second module. Because the second module is in the sleep state for a long time, the second module loses time synchronization and frequency synchronization with the network device 110. Loss of time synchronization means that the terminal device 120 does not know time information of a serving cell in which the terminal device 120 is currently located, including a slot boundary, a frame boundary, a slot number, a frame number, and the like (or a slot boundary, a frame boundary, a slot number, a frame number, and the like that are considered by the terminal device 120 are different from a slot boundary, a frame boundary, a slot number, and a frame number that are considered by the network device 110). Loss of frequency synchronization means that the terminal device 120 currently does not know frequency information of the network device 110, including a frequency position of an SSB of a serving cell in which the terminal device 120 is located (or a frequency position that is of an SSB and that is considered by the terminal device 120 is different from a frequency position that is of an SSB and that is considered by the network device 110).

Therefore, when the second module loses time synchronization and frequency synchronization with the network device 110, both time overheads and power consumption overheads needed when the woken-up second module performs synchronization with the network device 110 are high.

In view of the foregoing technical problem, this application provides a synchronization method and a communication apparatus, to reduce time overheads and power consumption overheads needed for synchronization when a second module switches from a sleep state to an awake state.

The following describes a synchronization method and a communication apparatus in embodiments of this application with reference to the accompanying drawings.

FIG. 5 is a schematic interaction flowchart of a synchronization method 500. The method procedure in FIG. 5 may be performed by a terminal device 120 and a network device 110, or may be performed by modules and/or components (for example, chips or integrated circuits) that have corresponding functions and that are installed in the terminal device 120 and the network device 110. This is not limited in this application. The following uses the terminal device 120 and the network device 110 as an example for description. As shown in FIG. 5, the method 500 includes the following steps.

S510: The network device 110 sends information 1 (for example, first information) and a signal 1 (for example, a first signal) to a first module of the terminal device 120.

Correspondingly, the first module receives the signal 1 and the information 1 from the network device 110.

Specifically, that the network device 110 sends the information 1 and the signal 1 to the first module may be: The network device 110 first sends the signal 1 to the first module, and then sends the information 1 to the first module; or the network device 110 first sends the information 1 to the first module, and then sends the signal 1 to the first module, or the network device 110 sends the information 1 and the signal 1 to the first module simultaneously. A sequence of the signal 1 and the information 1 is not limited in this application. The information 1 may be synchronization information, and is used for synchronization between the network device 110 and a second module of the terminal device 120.

The signal 1 can be used to wake up the second module, and the information 1 can be used for synchronization between the second module and the network device 110. In an example, the signal 1 is a wake-up signal, and is used to trigger wake-up of the second module. To be specific, after the first module receives (or detects) the signal 1, the first module triggers the second module to be in/to switch to an on state. It should be understood that there is a start delay for the second module to switch from a sleep state to an awake state. For details, refer to the following descriptions. Details are not described herein.

In a possible implementation, the network device 110 communicates with the first module by using a first frequency resource (or a first link). For example, the network device 110 sends the signal 1 and the information 1 to the first module by using the first frequency resource, and the first module receives the signal 1 and the information 1 from the network device 110 by using the first frequency resource.

Specifically, the first frequency resource is a frequency resource (or a physical resource) used for communication between the network device 110 and the first module. The first link is a logical connection relationship between the network device 110 and the first module. A prerequisite for establishing the logical connection relationship is that there is a frequency resource for implementing communication between the network device 110 and the first module.

Optionally, that the network device 110 communicates with the first module by using the first frequency resource (or the first link) may also be described as follows: The network device 110 communicates with the terminal device 120 by using the first frequency resource (or the first link).

In a possible implementation, the network device 110 communicates with the second module by using a second frequency resource (or a second link). For example, the network device 110 sends a signal 2 (for example, a second signal) to the second module by using the second frequency resource, and the second module receives the signal 2 from the network device 110 by using the second frequency resource. The signal 2 includes a signal, a channel type, or the like in an existing protocol. For example, the signal 2 includes one or more of the following: an SSB, a PDCCH, a PDSCH, a channel state information-reference signal (channel state information-reference signal, CSI-RS), and the like.

Specifically, the second frequency resource is a frequency resource (or a physical resource) used for communication between the network device 110 and the second module. The second link is a logical connection relationship between the network device 110 and the second module. A prerequisite for establishing the logical connection relationship is that there is a frequency resource (or a physical resource) for implementing communication between the network device 110 and the second module.

Optionally, that the network device 110 communicates with the second module by using the second frequency resource (or the second link) may also be described as follows: The network device 110 communicates with the terminal device 120 by using the second frequency resource (or the second link).

It should be noted that a position of the first frequency resource and a position of the second frequency resource may overlap, or may not overlap. This is not limited herein. It may be understood that, regardless of whether the position of the first frequency resource and the position of the second frequency resource overlaps, a logical connection relationship like the first link and the second link exists between the network device 110 and the terminal device 120.

In a possible implementation, step S510 may alternatively be: The terminal device 120 (or the first module of the terminal device 120) receives the signal 1 and the information 1 from the network device 110 by using the first frequency resource.

In a possible implementation, synchronization between the network device 110 and the second module includes at least one of time synchronization 1 and frequency synchronization 1. Correspondingly, the information 1 includes at least one of time information 1 and frequency information 1, which respectively corresponds to at least one of the time synchronization 1 and the frequency synchronization 1.

Example #1: The information 1 includes the time information 1, and the second module completes the time synchronization 1 with the network device 110 based on the time information 1. Example #2: The information 1 includes the frequency information 1, and the second module completes the frequency synchronization 1 with the network device 110 based on the frequency information 1. Example #3: The information 1 includes the time information 1 and the frequency information 1, and the second module completes the time synchronization 1 and the frequency synchronization 1 with the network device 110 respectively based on the time information 1 and the frequency information 1.

In a possible implementation, the time information 1 includes at least one of an index of a time unit on the first frequency resource (for example, an index of a time unit on the first frequency resource) and an index of a time unit on the second frequency resource (for example, index of time unit on the second frequency resource). For example, the time information 1 includes the index of the time unit on the first frequency resource, or the time information 1 includes the index of the time unit on the second frequency resource, or the time information 1 includes the index of the time unit on the first frequency and the index of the time unit on the second frequency resource. In this way, the second module may quickly complete time synchronization based on the index of the time unit on the first frequency resource in the information 1, to reduce time overheads and power consumption overheads needed for synchronization when the second module switches from the sleep state to the awake state.

Alternatively, the time unit on the first frequency resource may also be referred to as a time unit on the first link, and the time unit on the second frequency resource may also be referred to as a time unit on the second link.

Example #a: The time information 1 includes the index of the time unit on the second frequency resource, and when communicating with the network device 110, the second module determines, based on the index that is of the time unit on the second frequency resource and that is included in the time information 1, an index value of a time unit corresponding to a moment (that is, an index value of a time unit that is on the second link and that corresponds to a moment). For the example #a, whether an association relationship needs to exist between a time unit on the second frequency resource and a time unit on the first frequency resource is not limited in this application. In this way, the second module may quickly complete time synchronization based on the index of the time unit on the second frequency resource in the information 1, to reduce time overheads and power consumption overheads needed for synchronization when the second module switches from the sleep state to the awake state.

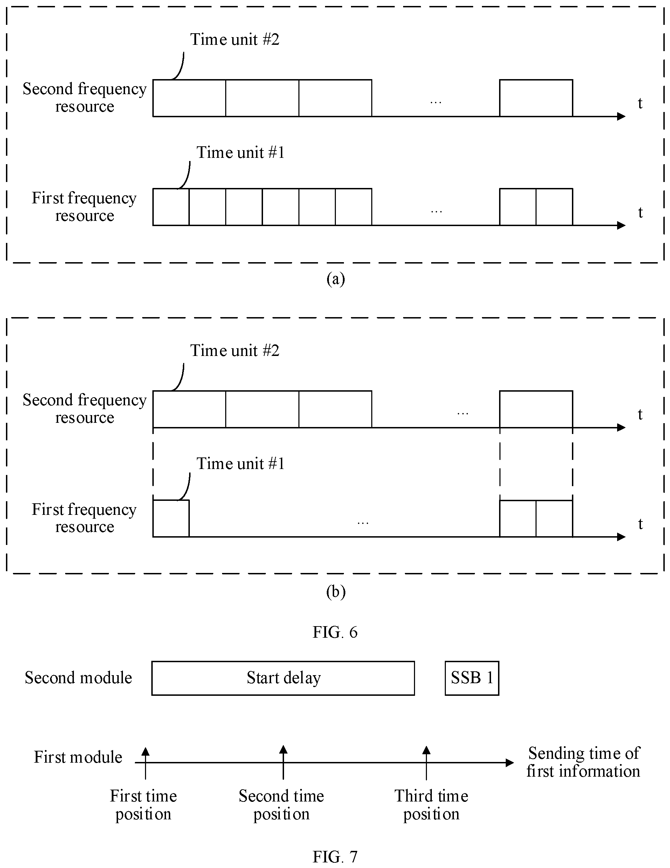

Optionally, if there is an association relationship between the time unit on the second frequency resource and the time unit on the first frequency resource, for specific descriptions of the association relationship, refer to FIG. 6.

Example #b: The time information 1 includes the index of the time unit on the first frequency resource, and an association relationship #1 is met between the time unit on the first frequency resource and the time unit on the second frequency resource. For specific descriptions of the association relationship #1 between the time unit on the first frequency resource and the time unit on the second frequency resource, refer to FIG. 6.

FIG. 6 is a diagram of the association relationship #1 between the time unit on the first frequency resource and the time unit on the second frequency resource. As shown in (a) in FIG. 6, a length of one time unit on the second frequency resource is equal to a length of two time units on the first frequency resource. For example, a length of a time unit #2 (representing any time unit on the second frequency resource) on the second frequency resource is 1 ms, and a length of a time unit #1 (representing any time unit on the first frequency resource) on the first frequency resource is 0.5 ms. Therefore, a length of one time unit on the second frequency resource is equal to a length of two time units on the first frequency resource.

It may be understood that (a) in FIG. 6 is described by using an example in which a length of one time unit on the second frequency resource is equal to a length of two time units on the first frequency resource. However, a scenario in which a length of one time unit on the second frequency resource is equal to a length of one, three, or more time units on the first frequency resource is not limited in this application. In conclusion, a length of one time unit on the second frequency resource corresponds to a length of at least one time unit on the first frequency resource.

Alternatively, a length of one time unit on the second link may be equal to a length of at least one time unit on the first link. For example, a length of a time unit #4 (representing any time unit on the second link) on the second link is 1 ms, and a length of a time unit #3 (representing any time unit on the second link) on the first link is 0.5 ms. Therefore, a length of one time unit on the second link is equal to a length of two time units on the first link.

It should be uniformly noted that, in this embodiment of this application, descriptions of the time unit on the first frequency resource may also be applicable to descriptions of the time unit on the first link. Similarly, descriptions of the time unit on the second frequency resource may also be applicable to descriptions of the time unit on the second link. Details are not described below.

As shown in (b) in FIG. 6, a start boundary of a 1^{st} time unit on the second frequency resource is aligned with or overlaps a start boundary of a 1^{st} time unit on the first frequency resource, a start boundary of a last time unit on the second frequency resource is aligned with or overlaps a start boundary of a penultimate time unit on the first frequency resource, and an end boundary of the last time unit on the second frequency resource is aligned with or overlaps an end boundary of a last time unit.

It may be understood that (b) in FIG. 6 is described by using an example in which a length of one time unit on the second frequency resource is equal to a length of two time units on the first frequency resource. In this case, a boundary (which may be a start boundary or an end boundary, and is not limited) of a time unit on the second frequency resource may be aligned with or overlap a boundary (which may be a start boundary or an end boundary, and is not limited) of a time unit on the first frequency resource. However, when a length of one time unit on the second frequency resource and a length of one time unit on the first frequency resource meet a non-multiple relationship, for example, when a length of one time unit on the second frequency resource is 1.5 times a length of one time unit on the first frequency resource, a length of two time units (a 1^{st} time unit and a 2^{nd} time unit are used as an example) on the second frequency resource are equal to a length of three time units (a 1^{st} time unit, a 2^{nd} time unit, and a 3^{rd} time unit are used as an example) on the first frequency resource. This means that a start boundary of the 1^{st} time unit on the second frequency resource corresponds to a start boundary of the 1^{st} time unit on the first frequency resource, and an end boundary of the 2^{nd} time unit on the second frequency resource is aligned with an end boundary of the 3^{rd} time unit on the first frequency resource. In conclusion, a boundary (which may be a start boundary or an end boundary, and is not limited) of a time unit on the second frequency resource is aligned with or overlaps a boundary (which may be a start boundary or an end boundary, and is not limited) of a time unit on the first frequency resource.

In conclusion, if the association relationship #1 between the time unit on the first frequency resource and the time unit on the second frequency resource is defined, the first module transfers the index of the time unit on the first frequency resource to the second module, and then the second module determines, based on the index of the time unit on the first frequency resource and the association relationship #1, the index of the corresponding time unit on the second frequency resource. Alternatively, the first module determines, based on the index of the time unit on the first frequency resource and the association relationship #1, the index of the corresponding time unit on the second frequency resource, and then the first module transfers the index of the time unit on the second frequency resource to the second module. An index of a time unit can indicate a position or a number of the time unit on the first frequency resource, so that the second module determines an index value of a time unit corresponding to a moment (that is, an index value of a time unit that is on the second link and that corresponds to a moment). In this way, the first module may send only the index of the time unit on the first frequency resource to the second module, and the second module may determine the index of the corresponding time unit on the second frequency resource based on the index of the time unit on the first frequency resource and the association relationship between the time unit on the first frequency resource and the time unit on the second frequency resource.

It may be understood that the time unit on the first frequency resource corresponds to the time unit on the second frequency resource. For example, when the time unit on the first frequency resource is a symbol, the time unit on the second frequency resource is also a symbol, or when the time unit on the first frequency resource is a slot, the time unit on the second frequency resource is also a slot; or when the time unit on the first frequency resource is a subframe, the time unit on the second frequency resource is also a subframe; or when the time unit on the first frequency resource is a frame, the time unit on the second frequency resource is also a frame. In conclusion, the symbol, the slot, the frame, or the like is merely used as an example for description of the time unit, and another possible representation form of the time unit is not limited in this application.

Optionally, when a definition of the time unit on the first frequency resource is different from a definition of the time unit on the second frequency resource, this application also supports establishment of an association relationship similar to the association relationship #1 between the time unit on the first frequency resource and the time unit on the second frequency resource.

In a possible implementation, the frequency information 1 indicates a frequency position of an SSB 1. Correspondingly, the second module completes the frequency synchronization 1 with the network device 110 based on the frequency position of the SSB 1. The SSB 1 is periodically sent by the network device 110 to the second module by using the second frequency resource. Specifically, the second module may determine, based on the frequency information 1, the frequency position of the SSB 1 periodically sent by the network device 110. Further, the second module receives, at the frequency position that is of the SSB 1 and that is determined based on the frequency information 1, the SSB 1 sent by the network device 110. In this way, the second module may quickly complete frequency synchronization based on the frequency information 1 in the information 1, to reduce time overheads and power consumption overheads needed for synchronization when the second module switches from the sleep state to the awake state.

Example #c: The frequency information 1 includes an index of a synchronization raster of an SSB 1, or a frequency offset between a frequency position of the SSB 1 and a frequency position of the first signal. Correspondingly, the second module completes the frequency synchronization 1 with the network device 110 based on the frequency information 1. For specific descriptions, refer to the following descriptions. Details are not described herein.

S520: The second module of the terminal device 120 performs synchronization with the network device 110 based on the information 1.

Specifically, that the second module performs synchronization with the network device 110 based on the information 1 may include the following several exemplary scenarios.

Example #s1: The information 1 includes the time information 1, and the second module determines, based on the time information 1, an index value of a time unit corresponding to a moment (that is, an index value of a time unit that is on the second link and that corresponds to a moment).

Example #s2: The information 1 includes the frequency information 1, and the second module receives the SSB 1 from the network device 110 at the frequency position indicated by the frequency information 1.

Example #s3: The information 1 includes the time information 1 and the frequency information 1, and the second module determines, based on the time information 1, an index value of a time unit corresponding to a moment (that is, an index value of a time unit that is on the second link and that corresponds to a moment). Further, the second module may determine a time position of the SSB 1 based on the determined index value of the time unit, and receive the SSB 1 from the network device 110 on the second frequency resource.

Specifically, after the first module receives the signal 1, the first module triggers state switching of the second module, that is, enables the second module to switch from the sleep state to the awake state. Correspondingly, the first module forwards the information 1 to the second module, or the first module translates/processes the information 1 and sends the information 1 to the second module.

Further, the second module completes the synchronization with the network device 110 based on the information 1 sent by the first module. For a time point at which the first module sends the information 1 to the second module, refer to FIG. 7.

FIG. 7 is a diagram in which the first module sends the information 1 to the second module. As shown in FIG. 7, the first module forwards the information 1 to the second module at a first time position of the start delay of the second module, or the first module forwards the information 1 to the second module at a second time position of the start delay of the second module, or the first module forwards the information 1 to the second module at a third time position of the start delay of the second module. In conclusion, the second module may obtain the information 1 forwarded by the first module before, when, or after the second module switches from the sleep state to the awake state.

In a possible implementation, the second module can obtain the first information forwarded by the first module before detecting the SSB 1 periodically sent by the network device 110. Further, the second module detects, based on the first information, the SSB 1 periodically sent by the network device 110 (performs precise time/frequency synchronization based on the detected SSB 1). Because the second module obtains, based on the first information, the time position and the frequency position of the SSB 1 periodically sent by the network device 110, the terminal device 120 can be prevented from performing blind detection on the SSB 1 periodically sent by the network device 110, to reduce time overheads and power consumption overheads needed for synchronization between the terminal device 120 and the network device 110.

In conclusion, according to a solution in which the network device sends the information 1 used for synchronization to the terminal device and the first module forwards the information 1 to the second module, this application can reduce the time overheads and the power consumption overheads needed for the synchronization when the second module switches from the sleep state to the awake state.

The following further describes the method 500 shown in FIG. 5 with reference to other accompanying drawings.

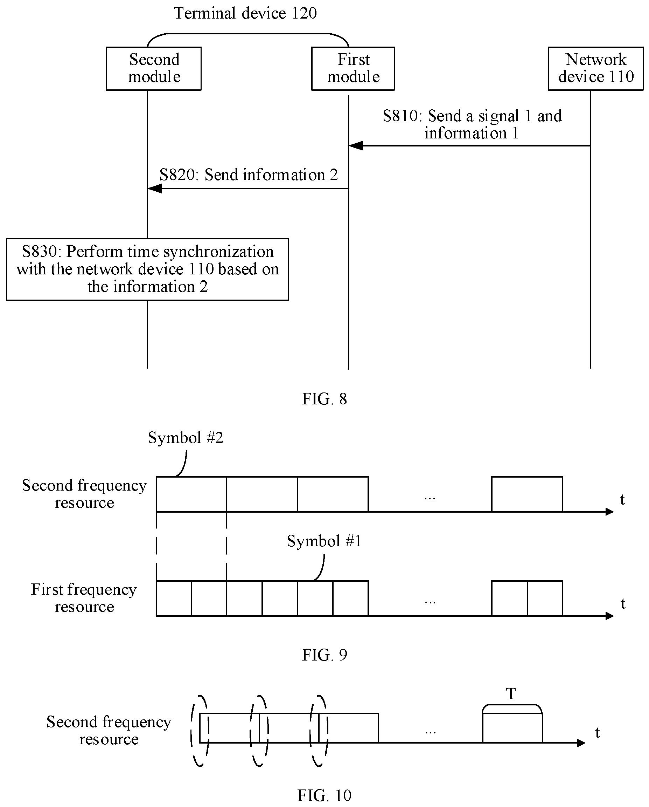

FIG. 8 is a schematic interaction flowchart of a synchronization method 800 according to an embodiment of this application. The method procedure in FIG. 8 may be performed by a terminal device 120 and a network device 110, or may be performed by modules and/or components (for example, chips or integrated circuits) that have corresponding functions and that are installed in the terminal device 120 and the network device 110. This is not limited in this application. The following uses the terminal device 120 and the network device 110 as an example for description. As shown in FIG. 8, the method 800 includes the following steps.

S810: The network device 110 sends a signal 1 and information 1 to a first module.

Correspondingly, the first module receives the signal 1 and the information 1 from the network device 110. For specific descriptions of S810, refer to descriptions of S510. Details are not described herein again.

For ease of description, the following uses an example in which the information 1 includes time information 1 for description. The time information 1 includes one or more of an index of a time unit on a first frequency resource and an index of a time unit on a second frequency resource.

In a possible implementation, a symbol on the first frequency resource and a symbol on the second frequency resource meet an association relationship #2. For details, refer to FIG. 9.

FIG. 9 is a diagram of the association relationship #2 between the symbol on the first frequency resource and the symbol on the second frequency resource. As shown in FIG. 9, a length of one symbol on the second frequency resource is equal to a length of two symbols on the first frequency resource, and a boundary of a symbol on the second frequency resource is aligned with or overlaps a boundary of a symbol on the first frequency resource. For example, a symbol #2 (where the symbol #2 represents any symbol on the second frequency resource) on the second frequency resource corresponds to two symbols #1 (where the symbol #1 represents any symbol on the first frequency resource) on the first frequency resource, and a boundary of a symbol on the second frequency resource is aligned with a boundary of a symbol on the first frequency resource.

It may be understood that FIG. 9 is described by using an example in which a length of one symbol on the second frequency resource is equal to a length of two symbols on the first frequency resource. However, a scenario in which a length of one symbol on the second frequency resource is equal to a length of one, three, or more symbols on the first frequency resource is not limited in this application. In conclusion, a length of one symbol on the second frequency resource corresponds to a length of at least one symbol on the first frequency resource.

It may be further understood that, in FIG. 9, a boundary of a symbol on the second frequency resource may be aligned with or overlap a boundary of at least one symbol on the first frequency resource. However, when a length of one symbol on the second frequency resource and a length of one symbol on the first frequency resource meet a non-multiple relationship, for example, when a length of one symbol on the second frequency resource is 1.5 times a length of one symbol on the first frequency resource, a length of two symbols (a 1^{st} symbol and a 2^{nd} symbol are used as an example) on the second frequency resource is equal to a length of three symbols (a 1^{st} symbol, a 2^{nd} symbol, and a 3^{rd} symbol are used as an example) on the first frequency resource. This means that a boundary of the 1^{st} symbol on the second frequency resource corresponds to a boundary of the 1^{st} symbol on the first frequency resource, and a boundary of the 2^{nd} symbol on the second frequency resource is aligned with a boundary of the 3^{rd} symbol on the first frequency resource. In conclusion, a boundary of a symbol (any symbol) on the second frequency resource is aligned with or overlaps a boundary of a symbol on the first frequency resource.

In conclusion, if the association relationship #2 between the symbol on the first frequency resource and the symbol on the second frequency resource is defined, the first module transfers boundary information of the symbol on the first frequency resource to a second module, and then the second module determines boundary information of the corresponding symbol on the second frequency resource based on the boundary information of the symbol on the first frequency resource and the association relationship #2. Alternatively, the first module determines boundary information of the corresponding symbol on the second frequency resource based on boundary information of the symbol on the first frequency resource and the association relationship #2, and then the first module transfers the boundary information of the symbol on the second frequency resource to the second module.

Optionally, the symbol on the second frequency resource is an orthogonal frequency division multiplexing (orthogonal frequency division multiplexing, OFDM) symbol, and the symbol on the first frequency resource is an OOK symbol or an FSK symbol.

S820: The first module sends information 2 to the second module, where the information 2 is used for time synchronization between the second module and the network device 110.

Correspondingly, the second module receives the information 2 from the first module. The information 2 includes the information 1 and one or more of the boundary information of the symbol on the first frequency resource and the boundary information of the symbol on the second frequency resource.

Specifically, the one or more of the boundary information of the symbol on the first frequency resource and the boundary information of the symbol on the second frequency resource are used for coarse time synchronization between the second module and the network device 110, and the information 1 is used for system-level time synchronization between the second module and the network device 110. The system-level time synchronization includes at least one of the following: slot synchronization, subframe synchronization, frame synchronization, and the like.

Specifically, the first module may determine one or more of the boundary information of the symbol on the first frequency resource and the boundary information of the symbol on the second frequency resource in the information 2 by using the following solution. For example, the first module receives a signal 4 (for example, a fourth signal) from the network device, where the signal 4 is a signal (or a synchronization signal) (or a signal sent on the first frequency resource, or a signal on a first link) used for synchronization between the first module and the network device, and determines a boundary position of a symbol on the first frequency resource based on the signal 4. Specifically, after receiving the signal 4, the first module determines the boundary position of the symbol on the first frequency resource based on a result of correlation between a locally generated sequence and the signal 4. After obtaining the boundary information of the symbol on the first frequency resource, the first module sends the boundary information to the second module, or the first module first determines boundary information of the corresponding symbol on the second frequency resource based on the association relationship #2, and then sends the boundary information to the second module. Correspondingly, the second module implements coarse time synchronization with the network device 110 based on the boundary information of the symbol on the second frequency. For details, refer to FIG. 10.

FIG. 10 is a diagram of performing coarse time synchronization by the second module. As shown in FIG. 10, a length of one symbol on the second frequency resource corresponds to a length of two symbols on the first frequency resource, and a boundary of a symbol on the second frequency resource is aligned with a boundary of an even-numbered symbol on the first frequency resource. For example, the first module determines that a moment A (where the moment A is boundary information of a symbol on the first frequency resource) is a boundary of an even-numbered symbol on the first frequency resource, and the first module sends the moment A to the second module. After being woken up, the second module determines a time position of a primary synchronization signal (primary synchronization signal, PSS)/secondary synchronization signal (secondary synchronization signal, SSS) of an SSB based on the moment A, instead of attempting to receive the PSS/SSS at all time positions. A position near A+nT shown in FIG. 10 (as shown by a dashed circle) is used as an example. T is a length of one symbol on the second frequency resource, and n is a natural number. In this way, a quantity of calculation times related to the PSS/SSS can be reduced, thereby reducing time overheads and power consumption overheads needed when the second module performs time synchronization.

Optionally, before attempting calculation related to a PSS/SSS of an SSB 1, the second module may be in a sleep state to save energy.

In a possible implementation, the first module may receive a signal 3 from the network device 110 before receiving the information 1 and the signal 1 from the network device 110, or after receiving the information 1 and the signal 1 from the network device 110 and before sending the information 2 to the second module.

S830: The second module performs time synchronization with the network device 110 based on the information 2.

Specifically, for descriptions of performing coarse time synchronization by the second module based on the information 2, refer to descriptions in FIG. 10. Details are not described herein again. For descriptions of performing system-level time synchronization by the second module based on the information 2, refer to the foregoing descriptions. Details are not described herein again.

In a possible implementation, the first module sends the time information 1 to the second module (the second module converts indexes of time units on two frequency resources), or the first module sends an index of a time unit on the second frequency resource to the second module (the first module converts indexes of time units on two frequency resources). Correspondingly, the second module determines a time position of the SSB 1 based on the index of the time unit on the second frequency resource, and then performs precise time synchronization or receives another downlink signal (for example, a PDCCH or a PDSCH) based on the SSB 1.

It should be noted that, when the second module can achieve high-precision synchronization with the assistance of the first module, the second module may not receive the SSB, and may directly receive another downlink signal. When the second module fails to achieve high-precision synchronization with the assistance of the first module, the second module may receive the SSB, to achieve synchronization with higher precision. Unified descriptions are provided herein, and details are not described below again.

According to the foregoing technical solution, the second module can obtain time information on the second frequency resource (or time information on the second link), and reduce, based on the obtained time information, a quantity of SSBs used for time synchronization, to reduce time overheads and power consumption overheads needed for time synchronization.

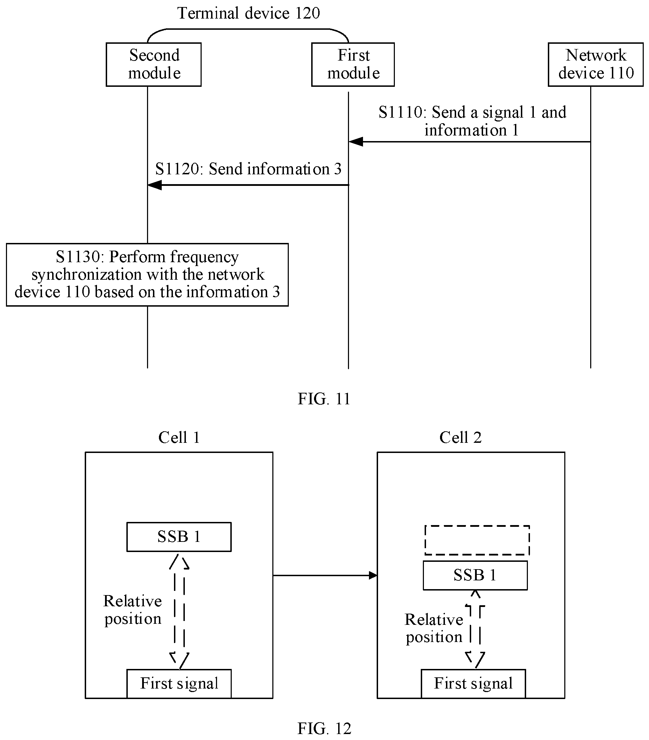

FIG. 11 is a schematic interaction flowchart of a synchronization method 1100 according to an embodiment of this application. The method procedure in FIG. 11 may be performed by a terminal device 120 and a network device 110, or may be performed by modules and/or components (for example, chips or integrated circuits) that have corresponding functions and that are installed in the terminal device 120 and the network device 110. This is not limited in this application. The following uses the terminal device 120 and the network device 110 as an example for description. As shown in FIG. 11, the method 1100 includes the following steps.

S1110: The network device 110 sends a signal 1 and information 1 to a first module.

Correspondingly, the first module receives the signal 1 and the information 1 from the network device 110. For descriptions of S1110, refer to descriptions of S510. Details are not described herein again.

For ease of description, the following uses an example in which the information 1 includes frequency information 1 for description. The frequency information 1 includes one or more of an index of a synchronization raster of an SSB 1 and a frequency offset 1 between a frequency position of the SSB 1 and a frequency position of the signal 1.

S1120: The first module sends information 3 to a second module, where the information 3 is used for frequency synchronization between the second module and the network device 110.

Correspondingly, the second module receives the information 3 from the first module. The information 3 includes the information 1 and a frequency offset 2 between a frequency generated by the first module based on a reference clock and a frequency of a signal 4 sent by the network device. Specifically, the frequency offset 2 is used for coarse frequency synchronization (or subcarrier-level synchronization) between the second module and the network device 110, and the information 1 is used for system-level (for example, resource block (resource block, RB)-level or physical resource block (physical resource block, PRB)-level) frequency synchronization between the second module and the network device 110.

For example, the frequency offset 2 may be a frequency offset between a center frequency generated by the first module based on the reference clock and a center frequency of the signal 4 sent by the network device, or may be a frequency offset between a center frequency generated by the first module based on the reference clock and a center frequency of a second frequency resource (namely, a second link). In this case, there is a correspondence between the center frequency of the second frequency resource (namely, the second link) and the frequency of the signal 4.

Specifically, the first module determines the frequency offset 2 by using the following solution. For example, the first module receives the signal 4 from the network device 110 by using a first frequency resource, where the signal 4 is a signal (or a synchronization signal or a reference signal) (or a synchronization signal or a reference signal sent on the first frequency resource, or a synchronization signal or a reference signal on a first link) used for frequency synchronization between the first module and the network device 110, estimates the frequency offset 2 between the first module and the network device 110 based on the signal 4, and stores the frequency offset 2. Further, the first module sends the frequency offset 2 to the second module, and the woken-up second module completes coarse frequency synchronization with the network device 110 based on the frequency offset 2. Then, the second module only needs to use a few SSBs to complete the system-level frequency synchronization.

In a possible implementation, the first module may receive the signal 4 from the network device 110 before receiving the information 1 and the signal 1 from the network device 110, or after receiving the information 1 and the signal 1 from the network device 110 and before sending the information 3 to the second module.

It should be understood that the first module and the second module have a same reference clock, and therefore the reference clock may be referred to as a reference clock of the terminal device 120. In this way, in this application, the first module may determine the frequency offset 2, and send the frequency offset 2 to the second module, and the second module implements coarse frequency synchronization with the network device 110 based on the frequency offset 2.

In an example, the frequency information 1 indicates the frequency position of the SSB 1, for example, the index of the synchronization raster (sync raster) of the SSB 1. In an example, the frequency information 1 indicates the frequency offset 1 between the frequency position of the signal 1 and the frequency position of the SSB 1.

In a possible implementation, the frequency position of the SSB 1 includes any one of a lowest frequency position, a highest frequency position, or a center frequency position of the SSB 1. Specifically, the frequency position of the SSB 1 may be any one of a sync raster corresponding to the lowest frequency position, a sync raster corresponding to the highest frequency position, or a sync raster corresponding to the center frequency position of the SSB 1.

In a possible implementation, the frequency position of the signal 1 includes any one of a lowest frequency position, a highest frequency position, or a center frequency position of the signal 1.

S1130: The second module performs frequency synchronization with the network device 110 based on the information 3.

Specifically, for descriptions of performing frequency synchronization with the network device 110 by the second module based on the information 3, refer to the foregoing descriptions of S1120. Details are not described herein again.

Specifically, when the terminal device 120 switches from the second module to the first module, the terminal device 120 determines a frequency position of the first module by receiving configuration information of the frequency position of the first module through the second module, and then switches to the first module. When the terminal device 120 switches from the first module to the second module, if a frequency position of an SSB in a serving cell in which the terminal device 120 is located does not change, the terminal device 120 may find the SSB 1 at a previous frequency position. If a serving cell changes in a process in which the terminal device 120 uses the first module, the terminal device 120 may not be able to determine a frequency position of an SSB. For details, refer to FIG. 12.

FIG. 12 is a diagram of movement of the terminal device between cells. As shown in FIG. 12, the terminal device 120 (which is the first module in this case) moves from a cell 1 to a cell 2. In this case, a relative position between the frequency position of the signal 1 and the frequency position of the SSB 1 changes. After the terminal device 120 uses the second module in the cell 2, the terminal device 120 attempts to search for the SSB 1 in a dashed box in FIG. 12, but the terminal device 120 fails to find the SSB 1 in the dashed box.

The first module forwards the frequency information 1 to the second module. After using the second module, the terminal device 120 may directly perform frequency synchronization at the frequency position that is of the SSB 1 and that is indicated by the frequency information 1. In this way, time overheads and power consumption overheads needed for searching for the SSB can be reduced.

According to the foregoing technical solution, the second module can obtain frequency information of the SSB 1, and reduce, based on the obtained frequency information, a quantity of SSBs used for frequency synchronization, to reduce time and power consumption needed for frequency synchronization.

The foregoing describes the method embodiments in embodiments of this application, and the following describes corresponding apparatus embodiments.

To implement functions in the methods provided in this application, both the terminal and the network device may include a hardware structure and/or a software module, and implement functions in the form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

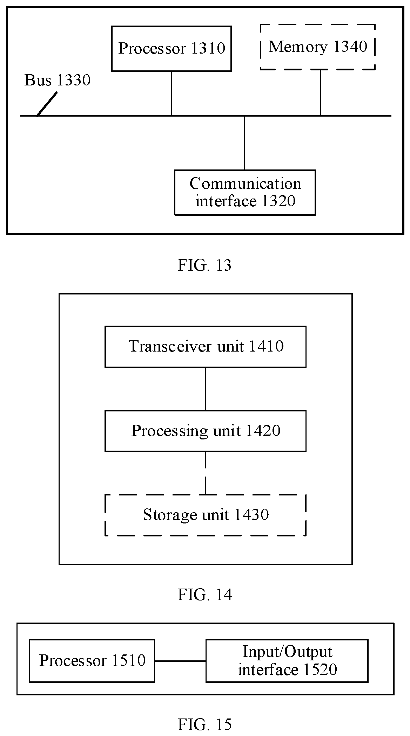

FIG. 13 is a block diagram of a communication apparatus 1300 according to an embodiment of this application. The communication apparatus 1300 includes a processor 1310 and a communication interface 1320. The processor 1310 and the communication interface 1320 may be connected to each other through a bus 1330. The communication apparatus 1300 shown in FIG. 13 may be a network device 110, or may be a terminal device 120.

Optionally, the communication apparatus 1300 further includes a memory 1340.

The memory 1340 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 1340 is configured to store related instructions and data.

The processor 1310 may be one or more central processing units (central processing units, CPUs). When the processor 1310 is one CPU, the CPU may be a single-core CPU or a multi-core CPU.

When the communication apparatus 1300 is the terminal device 120, for example, the processor 1310 is configured to perform the following operations: receiving information 1 and a signal 1 from the network device, where the information 1 is used for synchronization between a second module of the terminal device 120 and the network device 110, and the signal 1 is used to wake up the second module of the terminal device 120; and performing synchronization with the network device 110 based on the information 1.

The foregoing content is merely used as an example for description. When the communication apparatus 1300 is the terminal device 120, the communication apparatus 1300 is responsible for performing the methods or steps related to the terminal device 120 in the foregoing method embodiments.

When the communication apparatus 1300 is the network device 110, for example, the processor 1310 is configured to perform the following operations: sending information 1 and a signal 1, where the information 1 is used for synchronization between a second module of the terminal device 120 and the network device 110, and the signal 1 is used to wake up the second module of the terminal device 120.

The foregoing content is merely used as an example for description. When the communication apparatus 1300 is the network device 110, the communication apparatus 1300 is responsible for performing the methods or steps related to the network device 110 in the foregoing method embodiments.

The foregoing descriptions are merely examples. For specific content, refer to content shown in the method embodiments. In addition, for implementation of each operation in FIG. 13, refer to corresponding descriptions in the method embodiments shown in FIG. 5 to FIG. 12.

It should be noted that the processor or the like shown in the communication apparatus 1300 may be used as an internal structure of a first module of the terminal device 120, or may be used as an internal structure of the second module of the terminal device 120.

FIG. 14 is a block diagram of a communication apparatus 1400 according to an embodiment of this application. The communication apparatus 1400 may be the network device 110 or the terminal device 120 in the foregoing embodiments, or may be a chip or a module in the network device 110 or the terminal device 120, and is configured to implement the methods in the foregoing embodiments. The communication apparatus 1400 includes a transceiver unit 1410. The following describes the transceiver unit 1410 by using an example.

The transceiver unit 1410 may include a sending unit and a receiving unit that are respectively configured to implement a sending function or a receiving function in the foregoing method embodiments. The transceiver unit 1410 may further include a processing unit, configured to implement a function other than the sending function or the receiving function.

When the communication apparatus 1400 is the terminal device 120, for example, the transceiver unit 1410 is configured to receive information 1 and a signal 1 from the network device 110, where the information 1 is used for synchronization between a second module of the terminal device 120 and the network device 110, and the signal 1 is used to wake up the second module of the terminal device 120.

Optionally, the communication apparatus 1400 may further include a processing unit 1420, configured to perform content related to steps such as processing and coordination of the terminal device 120. For example, the processing unit 1420 is configured to perform synchronization with the network device 110 based on the information 1.

Optionally, the communication apparatus 1400 further includes a storage unit 1430. The storage unit 1430 is configured to store a program or code used to perform the foregoing methods.

The foregoing content is merely used as an example for description. When the communication apparatus 1400 is the terminal device 120, the communication apparatus 1400 is responsible for performing the methods or steps related to the terminal device 120 in the foregoing method embodiments.

When the communication apparatus 1400 is the network device 110, for example, the transceiver unit 1410 is configured to send information 1 and a signal 1, where the information 1 is used for synchronization between a second module of the terminal device 120 and the network device 110, and the signal 1 is used to wake up the second module of the terminal device 120.

Optionally, the communication apparatus 1400 may further include a processing unit 1420, configured to perform content related to steps such as processing and coordination of the network device 110. For example, the processing unit 1420 is configured to determine the information 1, the signal 1, and the like.

Optionally, the communication apparatus 1400 further includes a storage unit 1430. The storage unit 1430 is configured to store a program or code used to perform the foregoing methods.

The foregoing content is merely used as an example for description. When the communication apparatus 1400 is the network device 110, the communication apparatus 1400 is responsible for performing the methods or steps related to the network device 110 in the foregoing method embodiments.

In addition, for implementation of each operation in FIG. 14, refer to corresponding descriptions of the methods shown in the foregoing embodiments. Details are not described herein again.

It should be noted that the transceiver unit or the like shown in the communication apparatus 1400 may be used as an internal structure of a first module of the terminal device 120, or may be used as an internal structure of the second module of the terminal device 120.

The apparatus embodiments shown in FIG. 13 and FIG. 14 are used to implement the content described in the method embodiments FIG. 5 to FIG. 12. Therefore, for specific execution steps and methods of the apparatuses shown in FIG. 13 and FIG. 14, refer to the content described in the foregoing method embodiments.

It should be understood that the transceiver unit may include a sending unit and a receiving unit. The sending unit is configured to perform a sending action of the communication apparatus, and the receiving unit is configured to perform a receiving action of the communication apparatus. For ease of description, in this embodiment of this application, the sending unit and the receiving unit are combined into one transceiver unit. Unified descriptions are provided herein, and details are not described below.

FIG. 15 is a diagram of a communication apparatus 1500 according to an embodiment of this application. The communication apparatus 1500 may be configured to implement functions of the network device 110 and the terminal device 120 in the foregoing methods. The communication apparatus 1500 may be a chip in the network device 110 or the terminal device 120.

The communication apparatus 1500 includes an input/output interface 1520 and a processor 1510. The input/output interface 1520 may be an input/output circuit. The processor 1510 may be a signal processor, a chip, or another integrated circuit that can implement the methods in this application. The input/output interface 1520 is configured to input or output a signal or data.

For example, when the communication apparatus 1500 is the terminal device 120, the input/output interface 1520 is configured to receive information 1 and a signal 1 from the network device 110, where the information 1 is used for synchronization between a second module of the terminal device 120 and the network device 110, and the signal 1 is used to wake up the second module of the terminal device 120. The processor 1510 is configured to perform some or all steps of any method provided in embodiments of this application. For example, the processor 1510 is configured to perform synchronization with the network device 110 based on the information 1.

For example, when the communication apparatus 1500 is the network device 110, the input/output interface 1520 is configured to send information 1 and a signal 1, where the information 1 is used for synchronization between a second module of the terminal device 120 and the network device 110, and the signal 1 is used to wake up the second module of the terminal device 120. The processor 1510 is configured to perform some or all steps of any method provided in embodiments of this application.

In a possible implementation, the processor 1510 executes instructions stored in a memory, to implement a function implemented by the network device or the terminal device.

Optionally, the communication apparatus 1500 further includes the memory.

Optionally, the processor and the memory are integrated together.

Optionally, the memory is outside the communication apparatus 1500.

In a possible implementation, the processor 1510 may be a logic circuit, and the processor 1510 inputs/outputs a message or signaling through the input/output interface 1520. The logic circuit may be a signal processor, a chip, or another integrated circuit that can implement the methods in embodiments of this application.

The foregoing descriptions of the apparatus in FIG. 15 are merely an example for description. The apparatus can be configured to perform the methods in the foregoing embodiments. For specific content, refer to the descriptions in the foregoing method embodiments. Details are not described herein again.

It should be noted that the processor or the like shown in the communication apparatus 1500 may be used as an internal structure of a first module of the terminal device 120, or may be used as an internal structure of the second module of the terminal device 120.

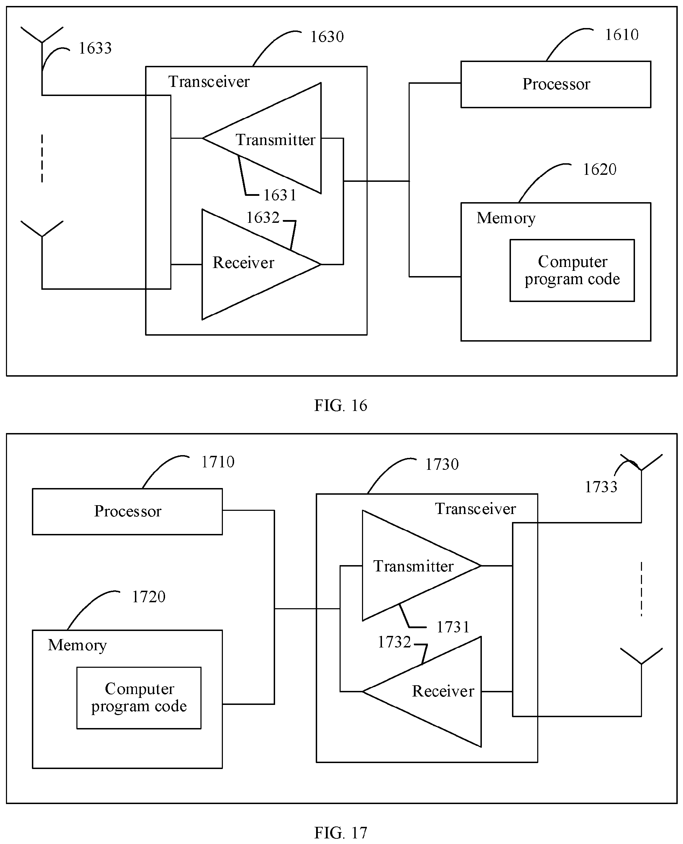

FIG. 16 is a block diagram of a communication apparatus 1600 according to an embodiment of this application. The communication apparatus 1600 may be a network device 110 or a chip. The communication apparatus 1600 may be configured to perform operations performed by the network device 110 in the method embodiments shown in FIG. 5 to FIG. 12.

When the communication apparatus 1600 is the network device 110, for example, a base station, FIG. 16 is a diagram of a simplified structure of the base station. The base station includes a part 1610, a part 1620, and a part 1630. The part 1610 is mainly configured to: perform baseband processing, control the base station, and the like. The part 1610 is usually a control center of the base station, may be usually referred to as a processor, and is configured to control the base station to perform a processing operation on the network device side in the foregoing method embodiments. The part 1620 is mainly configured to store computer program code and data. The part 1630 is mainly configured to receive and send a radio frequency signal, and perform conversion between a radio frequency signal and a baseband signal. The part 1630 may be usually referred to as a transceiver module, a transceiver machine, a transceiver circuit, a transceiver, or the like. A transceiver module in the part 1730 may also be referred to as a transceiver machine, a transceiver, or the like, and includes an antenna 1633 and a radio frequency circuit (not shown in the figure). The radio frequency circuit is mainly configured to perform radio frequency processing. Optionally, in the part 1630, a component configured to implement a receiving function may be considered as a receiver, and a component configured to implement a sending function may be considered as a transmitter. In other words, the part 1630 includes a receiver 1632 and a transmitter 1631. The receiver may also be referred to as a receiving module, a receiver machine, a receiver circuit, or the like, and the transmitter may be referred to as a transmitting module, a transmitter machine, a transmitter circuit, or the like.

The part 1610 and the part 1620 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, or a plurality of boards share one or more memories, or a plurality of boards share one or more processors simultaneously.

For example, in an implementation, the transceiver module in the part 1630 is configured to perform a receiving and sending-related process performed by the network device in the embodiments shown in FIG. 5 to FIG. 12. The processor in the part 1610 is configured to perform a processing-related process performed by the network device in the embodiments shown in FIG. 5 to FIG. 12.

In another implementation, the processor in the part 1610 is configured to perform a processing-related process performed by a communication device in the embodiments shown in FIG. 5 to FIG. 12.

In another implementation, the transceiver module in the part 1630 is configured to perform a receiving and sending-related process performed by a communication device in the embodiments shown in FIG. 5 to FIG. 12.

It should be understood that FIG. 16 is merely an example rather than a limitation. The network device including the processor, the memory, and the transceiver may not depend on the structures shown in FIG. 13 to FIG. 15.

When the communication apparatus 1600 is a chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as output of the chip, and a receiving operation performed by the network device in the foregoing method embodiments may be understood as input of the chip.

FIG. 17 is a block diagram of a communication apparatus 1700 according to an embodiment of this application. The communication apparatus 1700 may be a terminal device 120, a processor of the terminal device 120, or a chip. The communication apparatus 1700 may be configured to perform an operation performed by the terminal device 120 or a communication device in the foregoing method embodiments.

When the communication apparatus 1700 is the terminal device 120, FIG. 17 is a diagram of a simplified structure of the terminal device. As shown in FIG. 17, the terminal device includes a processor, a memory, and a transceiver. The memory may store computer program code. The transceiver includes a transmitter 1731, a receiver 1732, a radio frequency circuit (not shown in the figure), an antenna 1733, and an input/output apparatus (not shown in the figure).

The processor is mainly configured to: process a communication protocol and communication data, control the terminal device, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display screen, or a keyboard, is mainly configured to receive data inputted by a user and output data to the user. It should be noted that some types of terminal devices may have no input/output apparatus.

When data needs to be sent, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 17 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have sending and receiving functions may be considered as a transceiver module of the terminal device, and the processor that has a processing function may be considered as a processing module of the terminal device.

As shown in FIG. 17, the terminal device includes the processor 1710, the memory 1720, and the transceiver 1730. The processor 1710 may also be referred to as a processing unit, a processing board, a processing module, a processing apparatus, or the like. The transceiver 1730 may also be referred to as a transceiver unit, a transceiver machine, a transceiver apparatus, or the like.

Optionally, a component for implementing a receiving function in the transceiver 1730 may be considered as a receiving module, and a component for implementing a sending function in the transceiver 1730 may be considered as a sending module. In other words, the transceiver 1730 includes a receiver machine and a transmitter machine. The transceiver may also be sometimes referred to as a transceiver machine, a transceiver module, a transceiver circuit, or the like. The receiver machine may also be sometimes referred to as a receiver, a receiving module, a receiver circuit, or the like. The transmitter machine may also be sometimes referred to as a transmitter, a transmitting module, a transmitter circuit, or the like.

For example, in an implementation, the processor 1710 is configured to perform a processing action on the terminal device side in the embodiments shown in FIG. 5 to FIG. 12, and the transceiver 1730 is configured to perform receiving and sending actions on the terminal device side in FIG. 5 to FIG. 12.

For example, in an implementation, the processor 1710 is configured to perform a processing action on the terminal device side in the embodiments shown in FIG. 5 to FIG. 12, and the transceiver 1730 is configured to perform receiving and sending actions on the terminal device side in FIG. 5 to FIG. 12.

It should be understood that FIG. 17 is merely an example rather than a limitation. The terminal device including the transceiver module and the processing module may not depend on the structures shown in FIG. 13 to FIG. 15.

When the communication apparatus 1700 is the chip, the chip includes a processor, a memory, and a transceiver. The transceiver may be an input/output circuit or a communication interface. The processor may be a processing module, a microprocessor, or an integrated circuit integrated on the chip. A sending operation performed by the terminal device in the foregoing method embodiments may be understood as output of the chip, and a receiving operation performed by the terminal device in the foregoing method embodiments may be understood as input of the chip.

This application further provides a chip, including a processor. The processor is configured to invoke, from a memory, instructions stored in the memory and run the instructions, to enable a communication device in which the chip is installed to perform the methods in the foregoing examples.

This application further provides another chip, including an input interface, an output interface, and a processor. The input interface, the output interface, and the processor are connected through an internal connection path. The processor is configured to execute code in a memory. When the code is executed, the processor is configured to perform the methods in the foregoing examples. Optionally, the chip further includes the memory, and the memory is configured to store a computer program or the code.

This application further provides a processor, configured to be coupled to a memory, and configured to perform the method and the function that are related to the network device or the terminal device in any one of the foregoing embodiments.

Another embodiment of this application provides a computer program product including instructions. When the computer program product is run on a computer, the method in the foregoing embodiments is implemented.

This application further provides a computer program. When the computer program is run on a computer, the method in the foregoing embodiment is implemented.

Another embodiment of this application provides a computer-readable storage medium. The computer-readable storage medium stores a computer program. When the computer program is executed by a computer, the method in the foregoing embodiments is implemented.

In the descriptions of embodiments of this application, unless otherwise specified, "a plurality of" means two or more. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, words such as "example" or "for example" are used to represent an example or a description.

Any embodiment or design solution described by using "example" or "for example" in embodiments of this application should not be explained as being more preferred or having more advantages than another embodiment or design solution. Exactly, use of the terms such as "example" or "for example" is intended to present a related concept in a specific manner for ease of understanding.

Unless otherwise specified, "/" in the descriptions of embodiments of this application represents an "or" relationship between associated objects. For example, A/B may represent A or B. In this application, "and/or" describes only an association relationship between associated objects and represents that three relationships may exist. For example, A and/or B may represent the following three cases: Only A exists, both A and B exist, and only B exists, where A and B may be singular or plural.

Sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed.

In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each unit may exist alone physically, or two or more units may be integrated into one unit.

When the functions are implemented in a form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A synchronization method, wherein the method is applied to a terminal device, the terminal device comprises a first module and a second module, and the method comprises:
receiving, by the first module, a first signal from a network device, wherein the first signal is used to wake up the second module;
receiving, by the first module, first information from the network device, wherein the first information is used for synchronization between the second module and the network device; and
performing, by the second module, synchronization with the network device based on the first information.

2. The method according to claim 1, wherein the first information comprises at least one of the following:
an index of a time unit on a first frequency resource, an index of a time unit on a second frequency resource, or frequency information, wherein
the first frequency resource is a frequency resource used by the first module to receive the first signal,
the second frequency resource is a frequency resource used by the second module to receive a second signal from the network device,
the second signal comprises at least one of a first synchronization signal block, a physical downlink control channel, a physical downlink shared channel, and a channel state information-reference signal, and
the frequency information is used to indicate a frequency position of a second synchronization signal block, wherein the second synchronization signal block is sent by the network device to the second module.

3. The method according to claim 2, wherein there is an association relationship between the time unit on the first frequency resource and the time unit on the second frequency resource.

4. The method according to claim 3, wherein the association relationship comprises at least one of the following:
a length of one time unit on the second frequency resource corresponds to a length of at least one time unit on the first frequency resource; or
a boundary of any time unit on the second frequency resource is aligned with or overlaps a boundary of a time unit on the first frequency resource.

5. The method according to claim 4, wherein
the time unit on the first frequency resource comprises at least one of the following:
a symbol, a slot, a subframe, or a frame; and
the time unit on the second frequency resource comprises at least one of the following:
a symbol, a slot, a subframe, or a frame.

6. The method according to any one of claims 2 to 5, wherein the frequency information comprises at least one of the following:
an index of a synchronization raster of the second synchronization signal block, or a frequency offset between a frequency position of the second synchronization signal block and a frequency position of the first signal.

7. A synchronization method, wherein the method is applied to a network device, and the method comprises:
sending a first signal to a first module of a terminal device, wherein the first signal is used to wake up a second module of the terminal device; and
sending first information to the first module, wherein the first information is used for synchronization between the second module and the network device.

8. The method according to claim 7, wherein the first information comprises at least one of the following:
an index of a time unit on a first frequency resource, an index of a time unit on a second frequency resource, or frequency information, wherein
the first frequency resource is a frequency resource used by the network device to send the first signal to the first module,
the second frequency resource is a frequency resource used by the network device to send a second signal to the second module, the second signal comprises at least one of a first synchronization signal block, a physical downlink control channel, a physical downlink shared channel, and a channel state information-reference signal, and
the frequency information indicates a frequency position of a second synchronization signal block, wherein the second synchronization signal block is sent by the network device to the second module.

9. The method according to claim 8, wherein there is an association relationship between the time unit on the first frequency resource and the time unit on the second frequency resource.

10. The method according to claim 9, wherein the association relationship comprises at least one of the following:
a length of one time unit on the second frequency resource corresponds to a length of at least one time unit on the first frequency resource; or
a boundary of any time unit on the second frequency resource is aligned with or overlaps a boundary of a time unit on the first frequency resource.

11. The method according to claim 10, wherein
the time unit on the first frequency resource comprises at least one of the following:
a symbol, a slot, a subframe, or a frame; and
the time unit on the second frequency resource comprises at least one of the following:
a symbol, a slot, a subframe, or a frame.

12. The method according to any one of claims 7 to 11, wherein the frequency information comprises at least one of the following:
an index of a synchronization raster of the second synchronization signal block, or a frequency offset between the frequency position of the second synchronization signal block and a frequency position of the first signal.

13. A communication apparatus, comprising:
a first module, configured to receive a first signal from a network device, wherein the first signal is used to wake up a second module of the communication apparatus;
the first module is further configured to receive first information from the network device, wherein the first information is used for synchronization between the second module and the network device; and
the second module is configured to perform synchronization with the network device based on the first information.

14. The apparatus according to claim 13, wherein the first information comprises at least one of the following:
an index of a time unit on a first frequency resource, an index of a time unit on a second frequency resource, or frequency information, wherein
the first frequency resource is a frequency resource used by the first module to receive the first signal,
the second frequency resource is a frequency resource used by the second module to receive a second signal from the network device,
the second signal comprises at least one of a first synchronization signal block, a physical downlink control channel, a physical downlink shared channel, and a channel state information-reference signal, and
the frequency information indicates a frequency position of a second synchronization signal block, wherein the second synchronization signal block is sent by the network device to the second module.

15. The apparatus according to claim 14, wherein there is an association relationship between the time unit on the first frequency resource and the time unit on the second frequency resource.

16. The apparatus according to claim 15, wherein the association relationship comprises at least one of the following:
a length of one time unit on the second frequency resource corresponds to a length of at least one time unit on the first frequency resource; or
a boundary of any time unit on the second frequency resource is aligned with or overlaps a boundary of a time unit on the first frequency resource.

17. The apparatus according to claim 16, wherein
the time unit on the first frequency resource comprises at least one of the following:
a symbol, a slot, a subframe, or a frame; and
the time unit on the second frequency resource comprises at least one of the following:
a symbol, a slot, a subframe, or a frame.

18. The apparatus according to any one of claims 13 to 17, wherein the frequency information comprises at least one of the following:
an index of a synchronization raster of the second synchronization signal block, or a frequency offset between the frequency position of the second synchronization signal block and a frequency position of the first signal.

19. A communication apparatus, comprising:
a transceiver unit, configured to send a first signal to a first module of a terminal device, wherein the first signal is used to wake up a second module of the terminal device; and
the transceiver unit is further configured to send first information to the first module, wherein the first information is used for synchronization between the second module and the network device.

20. The apparatus according to claim 19, wherein the first information comprises at least one of the following:
an index of a time unit on a first frequency resource, an index of a time unit on a second frequency resource, or frequency information, wherein
the first frequency resource is a frequency resource used by the communication apparatus to send the first signal to the first module,
the second frequency resource is a frequency resource used by the communication apparatus to send a second signal to the second module,
the second signal comprises at least one of a first synchronization signal block, a physical downlink control channel, a physical downlink shared channel, and a channel state information-reference signal, and
the frequency information indicates a frequency position of a second synchronization signal block, wherein the second synchronization signal block is sent by the communication apparatus to the second module.

21. The apparatus according to claim 20, wherein there is an association relationship between the time unit on the first frequency resource and the time unit on the second frequency resource.

22. The apparatus according to claim 21, wherein the association relationship comprises at least one of the following:
a length of one time unit on the second frequency resource corresponds to a length of at least one time unit on the first frequency resource; or
a boundary of any time unit on the second frequency resource is aligned with or overlaps a boundary of a time unit on the first frequency resource.

23. The apparatus according to claim 22, wherein
the time unit on the first frequency resource comprises at least one of the following:
a symbol, a slot, a subframe, or a frame; and
the time unit on the second frequency resource comprises at least one of the following:
a symbol, a slot, a subframe, or a frame.

24. The apparatus according to any one of claims 19 to 23, wherein the frequency information comprises at least one of the following:
an index of a synchronization raster of the second synchronization signal block, or a frequency offset between the frequency position of the second synchronization signal block and a frequency position of the first signal.

25. A communication apparatus, comprising a processor, wherein the processor is configured to enable, by executing a computer program or instructions or by using a logic circuit, the communication apparatus to perform the method according to any one of claims 1 to 12.

26. The communication apparatus according to claim 25, wherein the communication apparatus further comprises a memory, and the memory is configured to store the computer program or the instructions.

27. The communication apparatus according to claim 25 or 26, wherein the communication apparatus further comprises a communication interface, and the communication interface is configured to input and/or output a signal.

28. A communication apparatus, comprising a logic circuit and an input/output interface, wherein
the input/output interface is configured to input and/or output a signal, and the logic circuit is configured to perform the method according to any one of claims 1 to 12.

29. A computer-readable storage medium, wherein the computer-readable storage medium stores a computer program or instructions; and
when the computer program or the instructions are run on a computer, the method according to any one of claims 1 to 12 is performed.

30. A computer program product, comprising instructions, wherein when the instructions are run on a computer, the method according to any one of claims 1 to 12 is performed.
